# EUROPÄISCHE PATENTSCHRIFT

(11) **EP 3 955 436 B1**
(45) Veröffentlichungstag und Bekanntmachung des Hinweises auf die Patenterteilung: **17.01.2024**
(21) Anmeldenummer: 20305931.6
(22) Anmeldetag: 14.08.2020
(51) Int. Cl.: H02K 11/215, H02K 16/02, H02K 41/03, G01D 5/14

(54) **LINEARMOTORSYSTEM UND BETRIEBSVERFAHREN FÜR EIN SOLCHES**
LINEAR MOTOR SYSTEM AND OPERATING METHOD FOR SAME
SYSTÈME DE MOTEUR LINÉAIRE ET PROCÉDÉ DE FONCTIONNEMENT POUR UN TEL SYSTÈME DE MOTEUR LINÉAIRE

(43) Veröffentlichungstag der Anmeldung: 16.02.2022
(73) Patentinhaber: Schneider Electric Industries SAS, 92500 Rueil Malmaison (FR)
(72) Erfinder: Geoffroy, Guillaume, 77955 Ettenheim (DE); Klöser, Frank, 77749 Hohberg (DE); Brechtefeld, Frank, 77652 Offenburg (DE)
(74) Vertreter: Manitz Finsterwald Patent- und Rechtsanwaltspartnerschaft mbB

(56) Entgegenhaltungen:
- EP-A1- 3 285 046
- DE-A1-102018 118 814
- US-A1- 2019 097 552
- US-A1- 2020 052 568
- US-A1- 2020 161 998
- US-A1- 2020 166 389

## Beschreibung

Die vorliegende Erfindung betrifft ein Linearmotorsystem, insbesondere Transportsystem, z.B. Multicarrier, mit mehreren oder für mehrere Läufer und mit einer Führungsbahn für die Läufer.

Linearmotoren sind heute weit verbreitet. Sie können zum Beispiel dazu eingesetzt werden, Produkte in Industrieanlagen zu bewegen, insbesondere zu transportieren. Zum flexiblen Transport von verschiedensten Produkten sind Multicarrier besonders vorteilhaft. Diese umfassen insbesondere eine Mehrzahl an Läufern, also Transporteinheiten, die einzeln und unabhängig voneinander bewegbar sind. In einem typischen Multicarrier-System ist die Führungsbahn in sich geschlossen, also praktisch endlos, was einen Umlaufbetrieb ermöglicht.

Bei Systemen mit mehreren Läufern ist es in vielen Anwendungsfällen nötig oder vorteilhaft, die einzelnen Läufer automatisch identifizieren zu können. Eine Identifizierung eines Läufers kann zum Beispiel wünschenswert sein, wenn ein Läufer im abgeschalteten oder stromlosen Zustand des Systems hinzugefügt oder entfernt wird. Gleiches gilt für den Fall, dass ein Läufer während des abgeschalteten Zustands zum Beispiel von Hand bewegt wird. Bei weiteren Anwendungsbeispielen weisen mehrere Läufer einen unterschiedlichen Aufbau, eine unterschiedliche Ausstattung, wie etwa unterschiedliche Werkzeuge, und/oder eine unterschiedliche zu transportierende Last auf. Bei einem besonderen Anwendungsbeispiel wird ein Produkt zwischen zwei Läufern gehalten und von diesen bewegt. Hierbei ist ebenfalls wünschenswert, die das Produkt haltenden Läufer mit einfachen Mitteln identifizieren zu können.

Ferner ermöglicht eine Identifizierung der Läufer eine Aufzeichnung von Prozessdaten für den jeweiligen Läufer, etwa einen kumulierten Bewegungsweg. Dies eröffnet vorteilhafte Möglichkeiten der vorausschauenden Wartung.

Vor diesem Hintergrund ist es ein übergeordnetes Ziel der Erfindung, einen Läufer identifizieren zu können, insbesondere anhand einer dem Läufer individuell zugeordneten Identifikationsinformation, insbesondere einer ID.

Eine bekannte Möglichkeit zur Identifizierung von Läufern in Linearmotorsystemen besteht in der Anwendung der RFID-Technologie. Dabei wird an jedem Läufer ein individuell unterschiedliches RFID-Tag angeordnet. An der Führungsbahn werden ein oder mehrere RFID-Lesegeräte angeordnet. Ein Nachteil dieses Ansatzes besteht darin, dass ein Läufer zu seiner Identifikation zu einem Lesegerät bewegt werden muss. Da typischerweise nur eine begrenzte Zahl von Lesegeräten vorgesehen sein wird, ist also die Identifikation örtlich auf die wenigen Lesegeräte begrenzt. Da das RFID-Tag und das Lesegerät drahtlos kommunizieren, besteht außerdem eine hiermit typischerweise einhergehende Störungsanfälligkeit. Ferner sind bei diesem Ansatz zusätzliche Komponenten nötig. Während RFID-Tags als solche zwar kostengünstig verfügbar sind, fallen aber zumindest für die Lesegeräte nicht unerhebliche Kosten an.

Ein weiterer bekannter Ansatz besteht darin, die Läufer mittels Infrarot-Lesegeräten an der Führungsbahn und entsprechenden Tags an den Läufern zu identifizieren. Die Nachteile sind denjenigen der RFID-Technologie ähnlich. Ferner ist die Infrarot-Technologie anfällig für Verschmutzungen, beispielsweise durch Flüssigkeiten und Stäube, weshalb ihr Einsatz in schwierigen Betriebsumgebungen von eingeschränkter Verlässlichkeit ist.

Ferner ist in der US 2019/0047794 A1 ein Ansatz beschrieben, bei dem an unterschiedlichen Läufern jeweils ein Positionsmagnet angeordnet ist, wobei die Positionsmagneten der jeweiligen Läufer unterschiedlich angeordnet oder ausgebildet sind, etwa hinsichtlich des Abstands zu einer an der Führungsbahn angeordneten Reihe von Magnetsensoren, welche Positionssensoren bilden, hinsichtlich der Feldstärke und/oder der Polarität der Positionsmagneten. Nachteilig ist hierbei, dass die Zahl der hierdurch identifizierbaren Läufer beschränkt ist. Insbesondere wird gelehrt, dass lediglich ein erster Läufer individuell identifiziert werden soll und weitere im System vorhandene Läufer anschließend in Abhängigkeit von der Position des ersten Läufers anhand ihrer Position nummeriert werden. Dies führt insbesondere dazu, dass keine eindeutige Identifizierung möglich ist, wenn ein Läufer im ausgeschalteten oder stromlosen Zustand des Systems hinzugefügt, entfernt oder unter Änderung der Reihenfolge anders positioniert wird. Dieser Ansatz ist also insbesondere nicht ohne weiteres im ausgeschalteten Zustand manipulationssicher. Außerdem beeinflusst eine Änderung des Positionsmagneten, etwa hinsichtlich des Abstands zum Magnetsensor, hinsichtlich der Feldstärke und/oder der Polarität, auch die Positionsmessung als solche.

DE 10 2018 118 814 A1 offenbart ein Verfahren, bei dem Schlitten eines linearen Transportsystems mittels Magnetfelderzeugern identifiziert werden können. Dabei kann ein zusätzlicher Magnetfelderzeuger zur Positionserfassung vorgesehen sein. Ein weiteres Transportsystem und Steuerverfahren sind in US 2020/0052568 A1 offenbart.

Es ist eine Aufgabe der Erfindung, die genannten Nachteile zumindest in Teilen zu überwinden. Insbesondere ist es die Aufgabe der Erfindung, in einem Linearmotorsystem der eingangs genannten Art einen Läufer auf besonders einfache Weise individuell identifizieren zu können, bevorzugt auch für eine Vielzahl an Läufern und/oder für den Fall einer Manipulation der im System vorhandenen Läufer im ausgeschalteten oder stromlosen Zustand der Systems.

Diese Aufgabe wird durch ein Linearmotorsystem gemäß Anspruch 1 gelöst.

Dieses umfasst an der Führungsbahn einen ersten Magnetsensor zur Ermittlung eines Magnetfelds in Bezug auf eine erste Raumrichtung und zur Ausgabe eines ersten Sensorsignals und einen zweiten Magnetsensor zur Ermittlung eines Magnetfelds in Bezug auf eine zweite Raumrichtung und zur Ausgabe eines zweiten Sensorsignals. Derartige Magnetsensoren sind an bekannten Linearmotorsystemen häufig ohnehin vorhanden, nämlich als Teil eines Positionserfassungssystems zur Ermittlung einer Position eines Läufers in Bezug auf die Führungsbahn. Somit können im Rahmen der Erfindung insbesondere Komponenten zur Identifikation des Läufers verwendet werden, die typischerweise ohnehin im Linearmotorsystem verwendet werden. Häufig umfasst ein Positionserfassungssystem sogar eine Reihe von 3D-Magnetfeldsensoren, wobei wenigstens zwei Dimensionen dieser Sensoren vorteilhafterweise zur Realisierung der Erfindung ausgenutzt werden können.

Eine Steuerungseinrichtung des Linearmotorsystems ist erfindungsgemäß dazu eingerichtet, auf Basis des ersten Sensorsignals eine Positionsinformation betreffend einen Läufer zu ermitteln. Dies entspricht, wie oben angedeutet, der an sich bekannten Maßnahme, einen Magnetsensor zur Ermittlung einer Position des Läufers einzusetzen, wie dies in üblichen, magnetischen Positionserfassungssystemen erfolgt.

Erfindungsgemäß ist die Steuerungseinrichtung außerdem dazu eingerichtet, auf Basis des zweiten Sensorsignals eine Identifikationsinformation betreffend den Läufer zu ermitteln.

Die Positionsinformation und die Identifikationsinformation werden also anhand von unterschiedlichen Richtungskomponenten eines am Läufer erzeugten Magnetfeldes ermittelt. Die Identifikationsinformation wird auf Basis einer Raumrichtung des Magnetfelds ermittelt, auf deren Basis keine Positionsinformation ermittelt wird. Die Positionsinformation und die Identifikationsinformation sind im Wesentlichen unabhängig voneinander ermittelbar und gegenseitige Störungen sind besonders gering. Dies ermöglicht eine besonders variantenreiche Kodierung der Identifikationsinformation im Magnetfeld. Durch die vielen möglichen Kodierungsvarianten kann insbesondere für eine Vielzahl an Läufern eine vollkommen individuelle Kennzeichnung, insbesondere eine individuelle ID, vergeben werden.

Letztlich lässt sich in der zweiten Raumrichtung bzw. der entsprechenden Magnetfeldkomponente sogar eine grundsätzlich beliebig große Informationsmenge präzise abbilden - wie es sich aus den weiteren Ausführungen noch im Detail ergeben wird -, die allenfalls durch die geometrischen Abmessungen des Läufers begrenzt ist. Dies bildet einen erheblichen Vorteil insbesondere gegenüber der vorstehend beschriebenen Lösung des Standes der Technik, bei der die Identität des Läufers in einer unterschiedlichen Anordnung oder Ausbildung des Positionsmagneten kodiert ist, etwa im Abstand des Positionsmagneten zum Magnetsensor. Denn dort ist die mögliche Informationsmenge durch die Auflösung des Magnetsensors und seine Toleranzen sowie durch die geometrischen Toleranzen des Systems erheblich beschränkt.

Grundsätzlich sind die erste und die zweite Raumrichtung verschieden. Insbesondere verläuft die zweite Raumrichtung quer zur ersten Raumrichtung. Besonders bevorzugt ist die zweite Raumrichtung zumindest im Wesentlichen senkrecht zur ersten Raumrichtung. Bei dieser Ausführungsform sind die gegenseitigen Störungen zwischen Position- und Identifikationsermittlung besonders gering. Grundsätzlich sind aber auch andere Winkel möglich, wobei gegebenenfalls gegenseitige Störungen größer sein können.

Gemäß einer Ausführungsform sind an wenigstens einem Läufer, insbesondere an mehreren Läufern jeweils, ein erster Magnet, insbesondere ein Positionsmagnet, und ein zweiter Magnet, insbesondere ein Identifikationsmagnet, angeordnet. Der erste und der zweite Magnet können insbesondere in unterschiedlichen Orientierungen am Läufer angeordnet sein. Alternativ oder zusätzlich können der erste und der zweite Magnet bevorzugt derart angeordnet sein, dass das Magnetfeld des ersten Magneten am Ort des ersten Magnetsensors in der ersten Raumrichtung wirksam ist und dass das Magnetfeld des zweiten Magneten am Ort des zweiten Magnetsensors in der zweiten Raumrichtung wirksam ist. Diese Ansätze erlauben auf einfache Weise durch die Magnetfelder gekennzeichnete Informationen bereitzustellen, die über die Magnetsensoren in unterschiedlichen Raumrichtungen ableitbar sind. Um Störungen zu reduzieren kann es außerdem vorteilhaft sein, wenn der erste und der zweite Magnet derart angeordnet sind, dass das Magnetfeld des ersten Magneten am Ort des zweiten Magnetsensors zumindest im Wesentlichen nicht in der zweiten Raumrichtung wirksam ist und dass das Magnetfeld des zweiten Magneten am Ort des ersten Magnetsensors zumindest im Wesentliche nicht in der ersten Raumrichtung wirksam ist

Der Begriff "Orientierung" bezieht sich grundsätzlich auf eine Ausrichtung des physischen Magneten, nämlich auf seine innere Magnetisierungsrichtung oder Polarität. Entsprechend der Konvention verläuft das Magnetfeld im Inneren eines Magneten von Süd nach Nord und außerhalb des Magneten von Nord nach Süd. Folglich entspricht die Orientierung eines hier in Rede stehenden Magneten seiner inneren Süd-Nord-Richtung.

Außerhalb des Magneten ist das Magnetfeld zwar bei zylindrischen Magneten typischerweise rotationssymmetrisch in Bezug auf die innere Süd-Nord-Richtung, dabei allerdings recht komplex geformt. Wenn ein Läufer mit Magnet in der Nähe eines Magnetsensors angeordnet ist, ist das äußere Magnetfeld unter anderem am Ort des Magnetsensors, also dort wo gemessen wird, wirksam. Dabei hat das Magnetfeld an diesem Ort eine bestimmte Richtung. Der Magnetsensor ist dazu eingerichtet, das Magnetfeld in Bezug auf eine bestimmte Raumrichtung zu erfassen. Die hierin genannte Raumrichtung bildet gewissermaßen eine Messrichtung, wobei erfindungsgemäß somit unterschiedliche Messrichtungen erfasst werden. Grundsätzlich muss die Richtung des vom Magneten des Läufers erzeugten Magnetfeldes nicht exakt mit der Messrichtung übereinstimmen. In der Messrichtung wird allerdings das Magnetfeld mit einer Richtungskomponente in Messrichtung erfasst. Lediglich wenn die Richtung des Magnetfeldes am Messort senkrecht zur Messrichtung ist, existiert keine Richtungskomponente des Magnetfeldes in Messrichtung und das Sensorsignal des betreffenden Magnetsensors ist für die betreffende Raumrichtung 0. In diesem Fall ist also das Magnetfeld am Ort des Magnetsensors nicht in der betreffenden Raumrichtung wirksam.

Ein Magnetsensor ermittelt typischerweise die Stärke des Magnetfelds. Konkret wird typischerweise die Feldstärke, die Flussdichte und/oder eine mit einer dieser Größen zusammenhängende Größe ermittelt. Außerdem ermittelt der Sensor typischerweise die Information, ob das Magnetfeld positiv oder negativ in Bezug auf die Raumrichtung bzw. Messrichtung orientiert ist. Dies drückt sich konkret z.B. durch ein entsprechendes Vorzeichen der Stärke des Magnetfelds bzw. des Sensorsignals aus. Grundsätzlich können die betragsmäßige Stärke und das Vorzeichen sowohl einzeln als auch gemeinsam zur Identifikation ausgenutzt werden.

Bei den am Läufer angeordneten ersten und/oder zweiten Magneten handelt es sich bevorzugt um Permanentmagneten, die z.B. zylindrisch oder quaderförmig ausgebildet sein können. Insbesondere können die ersten und/oder zweiten Magneten als Stabmagnet ausgeführt sein. Grundsätzlich ist es aber auch denkbar, den ersten und/oder zweiten Magneten als Elektromagnet auszubilden.

Der erste und der zweite Magnet können insbesondere quer zueinander orientiert sein. Besonders bevorzugt ist eine Ausführungsform, bei der der erste und der zweite Magnet zumindest im Wesentlichen senkrecht zueinander orientiert sind. Dies erlaubt eine besonders geringe Störung zwischen Positionsermittlung einerseits und Identifikationsermittlung andererseits. Es sind grundsätzlich aber auch andere Winkel möglich, wobei dann womöglich eine stärkere Störung auftritt. Eine solche kann aber beispielsweise durch einen vergrößerten Abstand zwischen dem ersten und dem zweiten Magneten, insbesondere Abstand in Führungs- oder x-Richtung, ausgeglichen werden.

Bei einer Weiterbildung ist vorgesehen, dass ein dritter Magnetsensor zur Ermittlung eines Magnetfelds in Bezug auf eine dritte Raumrichtung und zur Ausgabe eines dritten Sensorsignals vorgesehen ist, wobei die Steuerungseinrichtung dazu eingerichtet ist, die Positionsinformation auch auf Basis des dritten Sensorsignals zu ermitteln. Die Ermittlung der Positionsinformation lässt sich hierdurch besonders präzise durchführen. Die dritte Raumrichtung kann insbesondere quer, bevorzugt zumindest im Wesentlichen senkrecht zur ersten und/oder zweiten Raumrichtung ausgerichtet sein.

Das erste und/oder das dritte Sensorsignal vom ersten bzw. dritten Magnetsensor bilden insbesondere ein Positionssignal. Das zweite Sensorsignals vom zweiten Magnetsensor bildet insbesondere ein Identifikationssignal.

Bei einem vorteilhaften Beispiel ist vorgesehen, dass der erste, der zweite und/oder der dritte Magnetsensor durch eine gemeinsame Sensoreinheit gebildet sind. Die Sensoreinheit bildet insbesondere einen 2D- oder 3D-Sensor. Derartige Sensoreinheiten sind als solche kostengünstig verfügbar. Besonders vorteilhaft erweist sich dieses Beispiel in Systemen, die ohnehin eine Reihe von derartigen Sensoreinheiten aufweisen, wobei die Sensoreinheiten aber zuvor lediglich zur Positionsermittlung verwendet wurden. Eine Sensoreinheit misst also die zwei bzw. drei Richtungskomponenten des an einem Messort der Sensoreinheit vorhandenen Magnetfeldvektors. Dabei werden insbesondere unterschiedliche Komponenten für unterschiedliche Funktionen genutzt, nämlich eine oder zwei Komponenten für die Positionsermittlung und eine Komponente für die Identifikationsermittlung.

Bei einer besonders einfachen Ausführungsform sind der erste, der zweite und/oder der dritte Magnetsensor als Hallsensor ausgebildet. Vor allem 2D oder 3D-Hallsensoren lassen sich vorteilhaft einsetzen und sind kostengünstig verfügbar.

Mehrere erste, zweite und/oder dritte Magnetsensoren oder Sensoreinheiten können bevorzugt gemeinsam auf einer Platine angeordnet sein.

Bei typischen magnetischen Positionserfassungssystemen sind eine Mehrzahl von ersten, zweiten und/oder dritten Magnetsensoren entlang der Führungsbahn verteilt angeordnet. Dies erweist sich auch hier als vorteilhaft. Durch die Erfindung ist es möglich, die ohnehin vorhandene Sensorik des Positionserfassungssystems zusätzlich zur Identifikation der Läufer zu nutzen. Die Magnetsensoren sind bevorzugt in einer, insbesondere äquidistanten, Reihe von Sensoren bzw. Sensoreinheiten entlang der Führungsbahn angeordnet.

Weitere Ausführungsbeispiele beziehen sich auf ein nachfolgend definiertes, beispielhaftes Koordinatensystem. Da stellenweise auch Vorzeichen im Koordinatensystem eine Rolle spielen, wird das nachfolgend beschriebene Koordinatensystem grundsätzlich als Rechtssystem bzw. rechtshändige Koordinatensystem betrachtet. Die Ausführungen gelten aber natürlich grundsätzlich entsprechend auch für ein Linkssystem. Als Koordinatenursprung kann zum Beispiel ein Messpunkt eines jeweiligen Magnetsensors angesehen werden.

Die Führungsbahn definiert insbesondere eine x-Richtung, die einer Führungsrichtung der Führungsbahn entspricht. Eine y-Richtung erstreckt sich grundsätzlich senkrecht zur x-Richtung und eine z-Richtung erstreckt sich grundsätzlich senkrecht sowohl zur x-Richtung als auch zur y-Richtung.

Die z-Richtung kann insbesondere durch einen kleinsten Abstand zwischen dem ersten, zweiten und/oder dritten Magnetsensor einerseits und dem ersten und/oder zweiten Magneten andererseits definiert sein. Hiermit ist der kleinste Abstand im Betrieb des Systems und beim Passieren des Läufers am Magnetsensor gemeint. Die z-Richtung zeigt also gewissermaßen vom Magnetsensor zu den Magneten. Die y-Richtung ergibt sich damit im Rechtssystem.

Der erste und der zweite Magnet sind bevorzugt zumindest im Wesentlichen senkrecht zueinander und/oder senkrecht zur Bewegungsrichtung des Läufers orientiert. Gemäß einer bevorzugten Ausführungsform ist der erste Magnet zumindest im Wesentlichen in negativer oder positiver z-Richtung und/oder der zweite Magnet zumindest im Wesentlichen in negativer oder positiver y-Richtung orientiert.

Außerdem ist es vorteilhaft, wenn die erste Raumrichtung die x-Richtung oder die z-Richtung ist und/oder wenn die zweite Raumrichtung die y-Richtung ist. Die dritte Raumrichtung kann beispielsweise die z-Richtung bzw. die x-Richtung sein, je nachdem, welche Richtung die erste Raumrichtung ist. Somit ergibt sich, dass der erste Magnetsensor insbesondere die Bx-Komponente (oder die Bz-Komponente) des Magnetfelds erfasst. Der zweite Magnetsensor erfasst insbesondere die By-Komponente. Der dritte Magnetsensor erfasst insbesondere die Bz-Komponente (oder die Bx-Komponente). B steht dabei für die Flussdichte am Messort in der betreffenden Raumrichtung x, y oder z.

Gemäß einer vorteilhaften Weiterbildung ist vorgesehen, dass der erste, der zweite und/oder der dritte Magnetsensor, insbesondere die Sensoreinheit, zumindest im Wesentlichen in einer Ebene angeordnet ist, die senkrecht zur Orientierung des Magneten und durch einen Zentralpunkt des zweiten Magneten verläuft. Diese Ebene wird auch als Zentralebene des betreffenden Magneten bezeichnet.

Bei dieser Ebene handelt es sich im Rahmen des vorstehend beschriebenen Koordinatensystems bevorzugt um eine xz-Ebene. Eine xz-Ebene ist grundsätzlich eine Ebene, die durch die x-Richtung und die z-Richtung aufgespannt wird bzw. die parallel zur x-Richtung und zur z-Richtung ist.

Der Zentralpunkt des Magneten bezeichnet die Mitte des Magneten zwischen seinen Polen. In der Ebene, die durch diesen Zentralpunkt des Magneten verläuft und senkrecht zu seiner Orientierung ist, also in der Zentralebene, ist das Magnetfeld des Magneten grundsätzlich nur senkrecht zu dieser Ebene wirksam. Im Rahmen dieser Weiterbildung sollen also die Magnetsensoren zumindest im Wesentlichen in dieser Ebene angeordnet werden. Dadurch, dass das Magnetfeld des Magneten nur senkrecht zu dieser Ebene, insbesondere nur in y-Richtung, wirksam ist, findet keine Störung des Magnetfelds in den anderen beiden Raumrichtungen und somit keine Störung der Positionsermittlung statt. Dies gilt zumindest für ideale Magnetfelder, wobei sich der vorteilhafte Effekt aber auch in der praktischen Anwendung, also mit realen Magneten bzw. Magnetfeldern ausnutzen lässt. Ferner gilt dies grundsätzlich vor allem für gerade Abschnitte der Führungsbahn, für Kurvenabschnitte aber mit Einschränkungen.

Bei einer weiteren Ausführungsform ist vorgesehen, dass am Läufer mehrere zweite Magneten angeordnet sind, wobei die zweiten Magneten eine Kennung des Läufers bilden. Die Kennung kann grundsätzlich zum Beispiel durch eine den Läufer kennzeichnende Anzahl und/oder Anordnung der mehreren zweiten Magneten oder auch durch unterschiedlich starke Magnetisierung der zweiten Magneten realisiert werden. Bevorzugt ist grundsätzlich lediglich ein erster Magnet bzw. lediglich ein Positionsmagnet an einem Läufer vorgesehen.

Die mehreren zweiten Magneten können bevorzugt entlang der Bewegungsrichtung des Läufers verteilt, insbesondere zumindest innerhalb einer Gruppierung von zweiten Magneten äquidistant angeordnet sein.

Ein vorteilhaftes Ausführungsbeispiel sieht vor, dass am Läufer mehrere zweite Magneten angeordnet sind, die jeweils in einer bestimmten Orientierung am Läufer angeordnet sind, wobei die bestimmten Orientierungen bestimmten Identifikationsinformationen zugeordnet sind. Durch eine individuelle Komposition von Orientierungen lässt sich also beispielsweise auf einfache Weise eine Kennung, insbesondere eine Identifikationsnummer oder ID, eines jeweiligen Läufers bereitstellen.

Die zweiten Magneten können insbesondere in einer von einer ersten Orientierung und einer zweiten, insbesondere der ersten entgegengesetzten, Orientierung angeordnet sein. Durch lediglich zwei mögliche Orientierungen lässt sich beispielsweise auf einfache Weise eine binäre Kodierung als Kennung realisieren. Die erste Orientierung kann beispielsweise dem Wert 1 zugeordnet sein und die zweite Orientierung kann beispielsweise dem Wert 0 zugeordnet sein. Somit kann eine grundsätzlich beliebig lange Bitfolge entsprechend der Anzahl der zweiten Magneten implementiert werden.

Insoweit davon die Rede ist, dass die Orientierungen entgegengesetzt sind, ist hiermit eine inverse Orientierung im dreidimensionalen Raum gemeint. Entgegengesetzte Orientierungen sind also grundsätzlich parallel zueinander, zeigen aber eben in entgegengesetzte Richtungen. Beim Vergleich einer Orientierung mit ihrer entgegengesetzten Orientierung sind alle Vorzeichen der jeweiligen Richtungskomponenten in Bezug auf ein gegebenes Koordinatensystem umgekehrt.

Am Magnetsensor können sich die unterschiedlichen Orientierungen der Magneten beispielsweise in Messwerten mit entsprechend unterschiedlichen Vorzeichen niederschlagen. Bei den entgegengesetzten Orientierungen handelt es sich bevorzugt um Orientierungen in positiver und negativer y-Richtung. Im Ergebnis lässt sich also beispielsweise eine, insbesondere eindeutige, Identifikationsnummer des Läufers in der y-Polarisierung der Magneten, also in der Orientierung der Magneten Bezug auf die y-Richtung kodieren.

Grundsätzlich ermöglicht die vorstehend beschriebene Kodierung durch unterschiedliche Orientierungen der zweiten Magneten zumindest eine Identifikation des Läufers während einer Bewegung desselben. Diese muss dabei lediglich höchstens so groß sein, wie der Abstand zwischen zwei entlang der Führungsbahn benachbarten, zweiten Magnetsensoren.

Nachfolgend ist eine Ausführungsform beschrieben, welche die Identifikation zumindest eines der Läufer auch im Stillstand ermöglicht. Demnach kann ein erster Läufer eine Mehrzahl an zweiten Magneten aufweisen. Die zweiten Magneten des ersten Läufers und/oder eine Gruppierung von zweiten Magneten des ersten Läufers sind überwiegend in einer ersten Orientierung angeordnet. Außerdem kann ein zweiter Läufer eine Mehrzahl an zweiten Magneten aufweisen, wobei die zweiten Magneten am zweiten Läufer oder eine Gruppierung von zweiten Magneten am zweiten Läufer nicht überwiegend in der ersten Orientierung, insbesondere überwiegend in einer anderen, insbesondere der ersten entgegengesetzten, Orientierung angeordnet sind. Dies führt dazu, dass ein Magnetsensor, in dessen Nähe die zweiten Magneten des ersten Läufers angeordnet sind, entsprechend der überwiegenden Orientierung der zweiten Magneten eine relativ hohe Flussdichte oder Feldstärke misst, weil sich die Magnetfelder ergänzen. Hierüber lässt sich der erste Läufer von einem zweiten Läufer auch im Stillstand unterscheiden. An einem Magnetsensor, in dessen Nähe die zweiten Magneten des zweiten Läufers angeordnet sind, ergibt sich bei überwiegend entgegengesetzter Orientierung eine ähnlich hohe Flussdichte oder Feldstärke, allerdings mit umgekehrtem Vorzeichen. Wenn ferner die zweiten Magneten an einem Läufer zum Beispiel abwechselnd orientiert sind, findet keine verstärkende Überlagerung der Magnetfelder der einzelnen zweiten Magneten statt, sondern die Magnetfelder gleichen sich zum großen Teil aus. Dies lässt sich ebenfalls im Stillstand messen.

Im Sinne der weiter oben beschriebenen Ausführungsformen mit einer binären Kodierung durch unterschiedliche Magnetorientierungen sind also bei der hier beschriebenen Ausführungsform mit überwiegend unterschiedlich orientierten Magneten am ersten Läufer viele Magneten in Orientierung 1 angeordnet und am zweiten Läufer viele Magneten in Orientierung 0.

Die überwiegend unterschiedliche Orientierung der Magneten ermöglicht es also, zwischen dem ersten und dem zweiten Läufer auch im Stillstand auf einfache Weise zu differenzieren. Dies ermöglicht ferner einen schnelleren Startvorgang des Linearmotorsystems, weil wenigstens ein Läufer noch im Stillstand erkannt werden kann. Das Linearmotorsystem kann also ausgebildet sein, zumindest einen Läufer während des Stillstands dieses Läufers zu identifizieren. Wie beschrieben ist aber auch ein Identifikation während der Bewegung des Läufers, insbesondere in x-Richtung, möglich.

Zum Beispiel können am ersten Läufer alle zweiten Magneten in Orientierung 1 angeordnet sein, z.B. bei 8 Bit in der Form 1111 1111. An allen weiteren Läufern können die zweiten Magneten überwiegend in Orientierung 0 angeordnet sein, z.B. 0000 0000, 0000 0001, 0000 0010, ... , 1000 0000. In diesem Fall ist die richtungsabhängige Feldstärke, die beim ersten Läufer gemessen wird, signifikant anders, als bei den weiteren Läufern. Hierüber lässt sich der erste Läufer identifizieren, ohne ihn zu bewegen.

Alternativ oder zusätzlich wäre beispielsweise eine Identifikation im Stillstand des Läufers auch möglich, wenn die Sensoren und die zweiten Magneten untereinander in Führungs- bzw. x-Richtung zumindest im Wesentlichen gleich beabstandet sind. Dies gilt zumindest für den Fall, dass die Sensoren und die zweiten Magneten in Führungs- bzw. x-Richtung zumindest im Wesentlichen übereinstimmend, d.h. insbesondere in z-Richtung gegenüberliegend angeordnet sind.

Grundsätzlich umfasst das Linearmotorsystem bevorzugt eine Führungsbahn mit einer Mehrzahl von entlang der Führungsbahn verteilt angeordneten Elektromagneten; wenigstens einen Läufer, der von der Führungsbahn geführt und entlang dieser bewegbar ist und einen Antriebsmagneten zum Zusammenwirken mit den Elektromagneten der Führungsbahn zum Bewegen des Läufers umfasst; und eine Steuerungseinrichtung zur Steuerung der Bewegung des Läufers relativ zur Führungsbahn durch entsprechende Ansteuerung der Elektromagneten.

Der oder die Läufer können bevorzugt an der Führungsbahn mechanisch geführt sein, insbesondere durch eine Rollenführung.

Ferner ist die Steuerungseinrichtung eines Linearmotorsystems typischerweise dazu eingerichtet, die Bewegung des Läufers, insbesondere auf Basis einer Rückführungsinformation, wie etwa einer Positionsinformation, zu regeln. Dies erlaubt eine präzise Bewegung des Läufers entlang der Führungsbahn. Beispielsweise kann eine Geschwindigkeitsregelung, eine Positionsregelung, eine Beschleunigungsregelung, eine Stromregelung und/oder eine Kraftregelung vorgesehen sein. Die Rückführungsinformation kann z.B. die auf dem ersten und/oder dritten Sensorsignal beruhende Positionsinformation sein. Insoweit die Steuerungseinrichtung zur Regelung der Bewegung des Läufers eingerichtet ist, bezieht sich diese Regelung grundsätzlich auf die Längsrichtung der Führungsbahn. In Bezug auf diese kann etwa die Position, die Geschwindigkeit und/oder die Beschleunigung des Läufers und/oder die Kraft geregelt werden, welche von den Elektromagneten auf den Läufer ausgeübt wird.

Die Aufgabe wird ferner gelöst durch einen Läufer nach dem hierauf gerichteten, unabhängigen Anspruch, nämlich einen Läufer für ein Linearmotorsystem, insbesondere für ein Transportsystem, z.B. einen Multicarrier, insbesondere für ein Linearmotorsystem nach vorstehend beschriebener Art, wobei der Läufer wenigstens einen ersten Magneten, insbesondere einen Positionsmagneten, und wenigstens einen zweiten Magneten, insbesondere einen Identifikationsmagneten, aufweist und wobei der zweite Magnet quer, insbesondere zumindest im Wesentlichen senkrecht, zum ersten Magneten orientiert ist.

Bevorzugt können der erste und der zweite Magnet quer, insbesondere zumindest im Wesentlichen senkrecht, zur Führungs- bzw. Bewegungsrichtung des Läufers orientiert sein.

Die Aufgabe der Erfindung wird auch gelöst durch ein Verfahren nach dem hierauf gerichteten, unabhängigen Anspruch, nämlich ein Verfahren zum Betreiben eines Linearmotorsystems, insbesondere Transportsystems, z.B. Multicarriers, insbesondere eines Linearmotorsystems nach vorstehend beschriebener Art, wobei das Linearmotorsystem mehrere Läufer und eine Führungsbahn für die Läufer umfasst, wobei das Verfahren umfasst: Ermitteln eines Magnetfelds in Bezug auf eine erste Raumrichtung mittels eines ersten, an der Führungsbahn angeordneten Magnetsensors; Ermitteln eines Magnetfelds in Bezug auf eine zweite Raumrichtung mittels eines zweiten, an der Führungsbahn angeordneten Magnetsensors; Ermitteln einer Positionsinformation betreffend einen Läufer auf Basis des Magnetfelds in Bezug auf die erste Raumrichtung; Ermitteln einer Identifikationsinformation betreffend einen Läufer auf Basis des Magnetfelds in Bezug auf die zweite Raumrichtung.

Es versteht sich, dass die hierin beschriebenen Verfahren auch im Sinne der in Bezug auf die Vorrichtungen, also insbesondere Linearmotorsystem, Transportsystem und/oder Läufer, beschriebenen Einzelmerkmale und Ausführungsformen weitergebildet werden kann. Dies gilt auch umgekehrt und zwischen verschiedenen Verfahren und Vorrichtungen.

Die Erfindung wird nachfolgend lediglich beispielhaft anhand der schematischen Zeichnungen erläutert.
- Fig. 1: zeigt ein als Transportsystem ausgebildetes Linearmotorsystem.
- Fig. 2: zeigt einen Kurvenabschnitt des Transportsystems der Fig. 1.
- Fig. 3: zeigt einen Querschnitt des Transportsystems der Fig. 1 mit Schnittebene senkrecht zu einer Führungsbahn.
- Fig. 4: zeigt ein vereinfachtes Schema eines Läufers mit verschiedenen Magneten in Bezug auf eine Führungsbahn mit verschiedenen Magnetsensoren.
- Fig. 5 und 6: illustrieren die räumliche Anordnung von Positions- und Identifikationsmagneten.
- Fig. 7 bis 9: illustrieren eine Kodierung von Identifikationsinformationen durch unterschiedliche Orientierungen der Identifikationsmagneten.

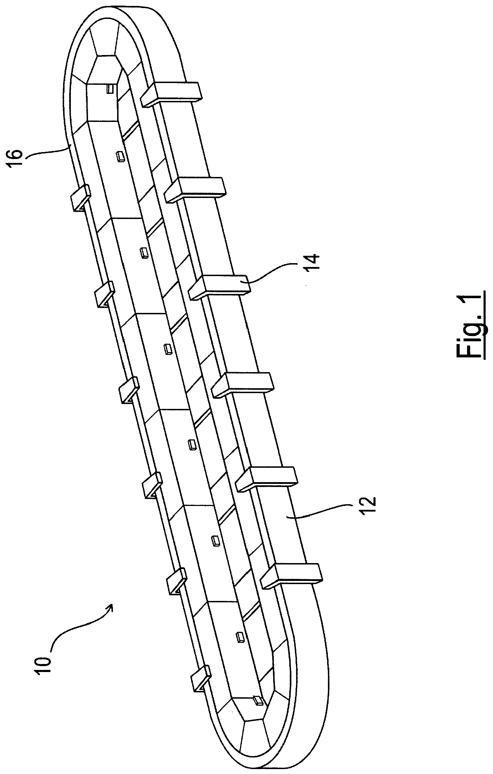

Ein erfindungsgemäßes Transportsystem 10, das als Multi-Carrier-System ausgebildet ist, ist in Fig. 1 dargestellt. Das Transportsystem 10 umfasst mehrere Linearmotoren 12, die aneinandergereiht angeordnet sind, so dass eine durchgehende und in diesem Fall umlaufende Bewegung der Läufer 14 entlang einer Führungsbahn 16 ermöglicht ist. Ferner umfasst das Transportsystem 10 mehrere Läufer 14, die einzelne Transportelemente des Transportsystems 10 bilden und die mittels der Linearmotoren 12 entlang der Führungsbahn 16, insbesondere unabhängig voneinander, bewegt werden können.

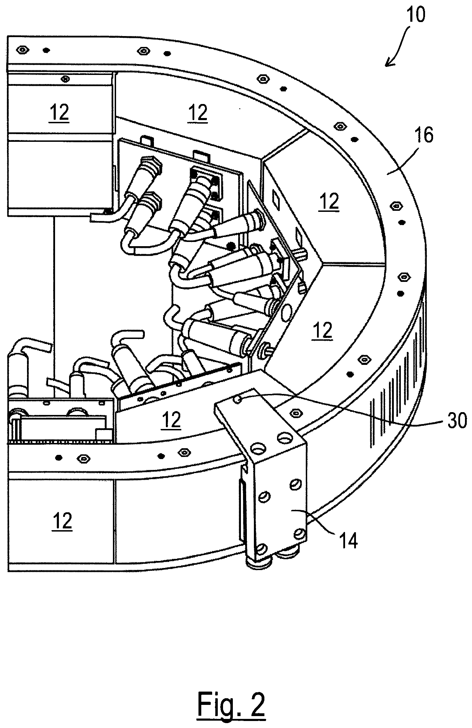

Fig. 2 zeigt einen Kurvenabschnitt des Transportsystems 10 in vergrößerter Ansicht. Hier ist lediglich ein Läufer 14 dargestellt, der entlang der Führungsbahn 16 bewegbar ist, nämlich über die Linearmotoren 12. Auf der dem Läufer 14 abgewandten Seite der Führungsbahn 16, also innerhalb der Kurve, sind verschiedene elektronische Einrichtungen zur Ansteuerung der Linearmotoren 12 sichtbar.

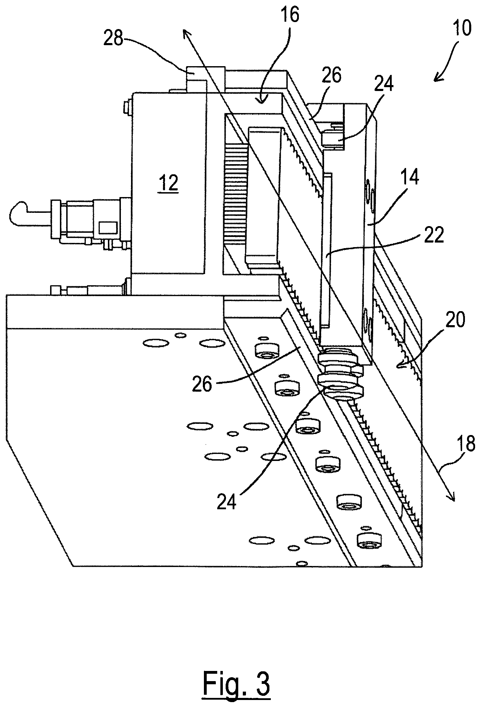

In Fig. 3 ist das Transportsystem 10 in einer Schnittansicht und vergrößert dargestellt. Es ist ein Läufer 14 sichtbar, der an der Führungsbahn 16 beweglich geführt ist. Dabei ist der Läufer 14 entlang einer Führungsachse 18 oder Bewegungsachse bewegbar. Zu einer Bewegung entlang der Führungsachse 18 wird der Läufer 14 durch eine Vielzahl von Elektromagneten 20 angesteuert, die an der Führungsbahn 16 angeordnet und entlang dieser gleichmäßig verteilt sind. Die Elektromagneten 20 wirken dabei mit einem am Läufer 14 angeordneten Permanentmagneten 22, der auch als Antriebsmagnet bezeichnet werden kann, zum Antrieb des Läufers 14 zusammen.

Der Läufer 14 ist an der Führungsbahn 16 mechanisch geführt, nämlich durch eine Rollenführung. Diese umfasst Führungsrollen 24 am Läufer 14 und Führungsschienen 26 an der Führungsbahn 16. Der Läufer 14 wird dabei insbesondere über den Permanentmagneten 22 an der Führungsbahn 16 gehalten.

Das Transportsystem 10 umfasst außerdem eine Positionserfassungseinrichtung 28. Dies kann zum Beispiel als Reihe von einer Vielzahl von Magnetsensoren ausgebildet sein, die sich entlang der Führungsbahn 16 erstreckt. Am Läufer 14 kann zum Beispiel ein Permanentmagnet 30 vorgesehen sein, der auch als Positionsmagnet bezeichnet werden kann und in Fig. 2 sichtbar ist.

Das Transportsystem 10 umfasst außerdem eine nicht separat dargestellte Steuerungseinrichtung, die dazu eingerichtet ist, die Elektromagneten 20 gezielt anzusteuern, um den Läufer 14 entlang der Führungsbahn 16 bzw. der Führungsachse 18 zu bewegen. Die Positionserfassungseinrichtung 28 führt dabei eine Positionsinformation betreffend die Position des Läufers 14 in Bezug auf die Führungsachse 18 zurück zur Steuerungseinrichtung. Die Steuerungseinrichtung regelt die Bewegung des Läufers 14 auf Basis der Positionsinformation.

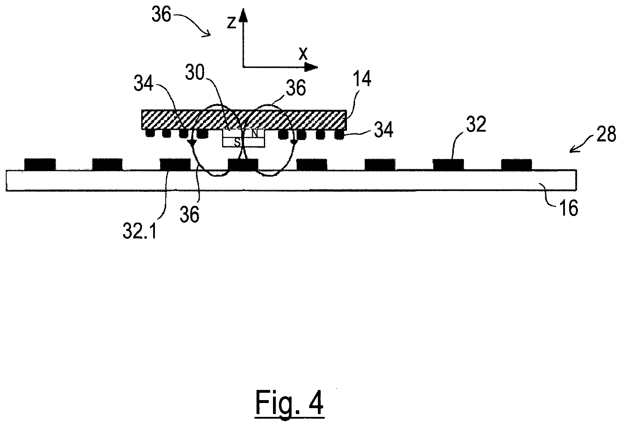

In Fig. 4 ist eine Positionserfassungseinrichtung 28 gezeigt, die eine Mehrzahl von an der Führungsbahn 16 angeordneten Magnetsensoreinheiten 32 aufweist. Eine jeweilige Magnetsensoreinheit 32 ist als 3D-Hallsensor ausgebildet. Eine jeweilige Magnetsensoreinheit 32 umfasst drei unabhängig in den drei Raumrichtungen messende Magnetsensoren mit einem gemeinsamen Messpunkt.

Ein Läufer 14, der entlang der Führungsbahn 16 geführt und bewegbar ist, umfasst einen Positionsmagneten 30 und eine Mehrzahl an Identifikationsmagneten 34, nämlich acht Identifikationsmagneten 34 in der gezeigten Ausführungsform.

Außerdem ist ein Koordinatensystem 36 angedeutet. Die Führungsrichtung der Führungsbahn 16 entspricht der x-Richtung. Die z-Richtung ist zur x-Richtung senkrecht und zeigt von einer jeweiligen Magnetsensoreinheit 32 zu den Magneten 30, 34. Die z-Richtung ist also durch den Abstand von der Magnetsensoreinheit 32 zum betreffenden Magneten 30, 34 definiert. Eine y-Richtung erstreckt sich senkrecht zur Bildebene und zwar in einem Rechtssystem in die Bildebene hinein.

Der Positionsmagnet 30 ist in z-Richtung orientiert, was unter anderem dadurch angedeutet ist, dass eine Querlinie am Positionsmagneten 30 eingezeichnet ist, die eine Zentralebene kennzeichnet. Ferner sind Feldlinien 36 des Positionsmagneten 30 angedeutet, die außerhalb des Magneten vom Nordpol zum Südpol verlaufen. Das Vorzeichen der Orientierung des Positionsmagneten 30 in Bezug auf die z-Richtung ist hier positiv, kann aber alternativ beispielsweise auch negativ sein, der Magnet 30 könnte also auch entgegengesetzt orientiert sein.

Die Magnetsensoreinheiten 32 sind mit einer Steuerungseinrichtung verbunden und übermitteln jeweils drei Sensorsignale, die zu den Komponenten Bx, By, Bz des am Messort herrschenden Magnetfelds in den drei Raumrichtungen x, y und z korrespondieren. Zwei dieser Raumrichtungen bzw. Sensorsignale werden von der Steuerungseinrichtung zur Ermittlung der Positionsinformation ausgewertet. Dies sind insbesondere die Komponenten Bx und Bz bzw. das Sensorsignal, welches das Magnetfeld in Bezug auf die x-Richtung repräsentiert, und das Sensorsignal, welches das Magnetfeld in Bezug auf die z-Richtung repräsentiert.

Der Positionsmagnet 30 ist in Bezug auf die y-Richtung zentrisch zur gegenüberliegenden Magnetsensoreinheit 32 angeordnet. Dies bedeutet, dass die y-Komponente des Magnetfelds bzw. By des Positionsmagneten 30 am Ort der Magnetsensoreinheit 32 im Wesentlichen stets 0 ist. Daher lässt sich in der y-Dimension eine Identifikationsinformation vorteilhaft kodieren, ohne dass sich die Positionsermittlung und die Identifikationsermittlung gegenseitig stören.

Dementsprechend sind die Identifikationsmagneten 34 in y-Richtung orientiert - entweder positiv oder negativ, d.h. ihre Süd-Nord-Richtung verläuft senkrecht zur Bildebene und entweder in diese hinein oder aus dieser heraus. Der Betrachter von Fig. 4 blickt also gewissermaßen auf das Südpol- bzw. Nordpolende eines jeweiligen Identifikationsmagneten 34.

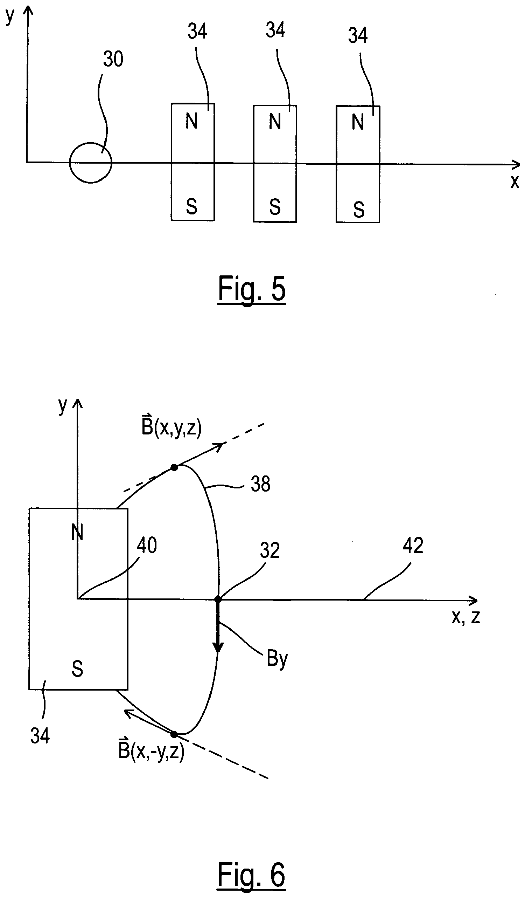

In Fig. 5 ist die räumliche Orientierung der Magneten 30 und 34 am Läufer 14 noch näher veranschaulicht. Es sind Raumrichtungen y und x angedeutet. Die Blickrichtung des Betrachters in Fig. 5 entspricht im Wesentlichen einer Betrachtung der Anordnung in Fig. 4 von oben. Die z-Richtung verläuft entsprechend senkrecht zur Bildebene und im Rechtssystem aus dieser heraus.

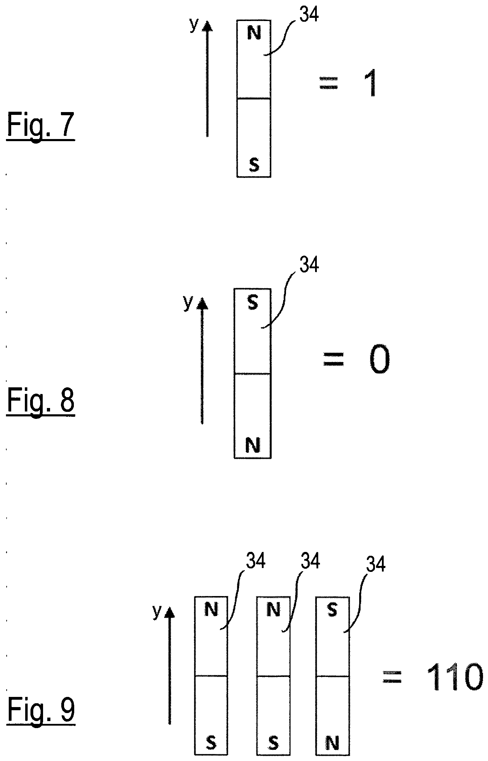

Die Identifikationsmagneten 34 sind in y-Richtung orientiert, und zwar in Fig. 5 allesamt positiv. Einzelne Identifikationsmagneten 34 können auch umgekehrt, also negativ in y-Richtung orientiert sein, wobei durch individuelle Kompositionen von solchen Orientierungen an unterschiedlichen Läufern eindeutige Kennungen für die Läufer gebildet werden können. Dies wird weiter unten mit Bezug auf die Fig. 7 bis 9 noch näher erläutert.

Der Positionsmagnet 30 ist in z-Richtung orientiert und dabei zentrisch in Bezug auf die z-Richtung und zentrisch in Bezug auf die Identifikationsmagneten 34 angeordnet. Ferner ist der Positionsmagnet 30 senkrecht zu den Identifikationsmagneten 34 orientiert.

In Fig. 6 ist der Verlauf des Magnetfelds 38 eines Identifikationsmagneten 34 veranschaulicht. Das Feld ist grundsätzlich rotationssymmetrisch in Bezug auf eine Zentralachse des Identifikationsmagneten 34, die mit der y-Achse zusammenfällt, bzw. in Bezug auf die Orientierung des Magneten, die parallel zur y-Achse ist. Aus diesem Grund gilt die Darstellung für alle Ebenen, die die y-Achse einschließen. Entsprechend sind an der nach rechts gerichteten Achse die x-Richtung und die z-Richtung gekennzeichnet. Das Feld ist ferner symmetrisch in Bezug auf die xz-Ebene.

Das Magnetfeld 38 weist grundsätzlich an jedem Ort Komponenten in x-, y- und z-Richtung auf. Dies ist insbesondere durch die in Fig. 6 angedeuteten Vektoren B illustriert. Je nachdem welcher Punkt im Raum betrachtet wird, sind die Komponenten unterschiedlich - stellenweise auch 0 - und weisen gegebenenfalls unterschiedliche Vorzeichen auf.

In einer Ebene, die senkrecht zur y-Richtung ist und durch einen Zentralpunkt 40 des Identifikationsmagneten 34 verläuft und die auch als Zentralebene 42 bezeichnet wird, sind die Komponenten in x- und z-Richtung stets im Wesentlichen 0. Diese Zentralebene 42 ist hier die xz-Ebene. Die y-Komponente ist hingegen nicht 0 - zumindest in einem hinreichend kleinen Abstand zum Identifikationsmagneten 34 - und in Fig. 6 durch den Vektor By angedeutet. Der Betrag des Vektors By bzw. die betragsmäßige Feldstärke und/oder Flussdichte in der Zentralebene 42 ist unter anderem abhängig vom Abstand des betrachteten Punktes zum Identifikationsmagneten 34. Das Vorzeichen ist abhängig von der Orientierung des Identifikationsmagneten 34.

Aus dem vorstehend gesagten ergibt sich, dass es besonders vorteilhaft ist, wenn die Magnetsensoreinheit 32 bzw. ein Messpunkt zumindest im Wesentlichen in der Zentralebene 42 des oder der Identifikationsmagneten 34 angeordnet wird, wie es in Fig. 6 durch das entsprechende Bezugszeichen angedeutet ist. Der Identifikationsmagnet 34 hat also lediglich einen Einfluss auf die Magnetsensoreinheit 32 in y-Richtung. Der Positionsmagnet hat lediglich einen Einfluss auf die Magnetsensoreinheit 32 in x- und z-Richtung. Die Magnetfeldmessung in Bezug auf die y-Richtung bildet die Grundlage für die Ermittlung der Identifikationsinformation. Die Ermittlung der Positionsinformation erfolgt mit Bezug auf die anderen beiden Raumrichtungen, nämlich in Bezug auf die x- und die z-Richtung, und zwar insbesondere an ein und demselben Messpunkt für alle drei Raumrichtungen. Somit wirkt sich das Magnetfeld des Identifikationsmagneten 34 - zumindest in geraden Bahnabschnitten - nicht negativ auf die Ermittlung der Positionsinformation aus. Umgekehrt wirkt sich das Magnetfeld des Positionsmagneten 30 nicht negativ auf die Ermittlung der Identifikationsinformation aus, was oben mit Bezug auf Fig. 5 bereits angedeutet wurde.

In den Fig. 7 bis 9 ist eine beispielhafte Möglichkeit zur Kodierung von Identifikationsinformationen betreffend einen Läufer 14 durch unterschiedliche Orientierungen der Identifikationsmagneten 34 näher veranschaulicht. So kann es beispielsweise festgelegt sein, dass eine Orientierung eines Identifikationsmagneten 34 in positiver y-Richtung, welche in den Fig. 7 bis 9 jeweils angedeutet ist, als eine Identifikationsinformation mit dem Wert 1 gewertet wird. Dies ist in Fig. 7 veranschaulicht. Die Orientierung des Identifikationsmagneten 34, also seine Süd-Nord-Richtung verläuft hier in positiver y-Richtung und repräsentiert den Wert 1. Der umgekehrte Fall ist in Fig. 8 illustriert. Hier ist die Orientierung des Identifikationsmagneten 34, also seine Süd-Nord-Richtung, in Bezug auf die y-Richtung negativ und repräsentiert den Wert 0. Durch mehrere Identifikationsmagneten 34 mit individueller Orientierung lassen sich Identifikationsinformationen mit einer Bittiefe entsprechend der Anzahl der Identifikationsmagneten 34 kodieren. In Fig. 9 ist dies mit drei Identifikationsmagneten 34 illustriert, von denen die ersten beiden positiv in Bezug auf die y-Richtung orientiert sind und den Wert 1 repräsentieren, wobei der dritte Identifikationsmagnet 34 negativ in Bezug auf die y-Richtung orientiert ist und den Wert 0 repräsentiert. Hierdurch lässt sich die Identifikationsinformation 110 kodieren. Damit lassen sich acht Läufer individuell kennzeichnen. Grundsätzlich lassen sich im Rahmen dieses Ansatzes mit n Identifikationsmagneten 34 je Läufer 14 insgesamt bis zu 2ⁿ Läufer individuell kennzeichnen.

Vor diesem Hintergrund wird nun wiederum Fig. 4 betrachtet. Hier weist der Läufer 14 acht Identifikationsmagneten 34 auf, die gruppiert angeordnet sind, nämlich in jeweils einer Gruppe links und rechts bzw. in x-Richtung vor und nach dem Positionsmagneten 30. Die Identifikationsmagneten 34 sind jeweils entweder positiv oder negativ in Bezug auf die y-Richtung orientiert und bilden so eine Kennung des Läufers 14. Diese lässt sich grundsätzlich während einer Bewegung des Läufers in x-Richtung auslesen, wobei die Bewegung zur Identifikation in etwa so lang sein sollte wie zwei benachbarte Magnetsensoreinheiten 32 mit ihren Messpunkten in Bezug auf die x-Richtung beabstandet sind. Die Magnetsensoreinheiten 32 bzw. die Messpunkte können beispielsweise einen gegenseitigen Abstand im Bereich von 1 bis 3 cm aufweisen.

Eine Ausführungsform, die eine Identifikation zumindest eines Läufers 14 auch im Stillstand erlaubt, wird nachfolgend beschrieben. Dazu wird die Gruppierung von vier Identifikationsmagneten 34 links des Positionsmagneten 30 bzw. oberhalb der einzeln referenzierten Magnetsensoreinheit 32.1 betrachtet. In dieser Gruppierung sind die Identifikationsmagneten 34 überwiegend, insbesondere allesamt in einer ersten Orientierung, zum Beispiel der Orientierung 1, angeordnet. Dies führt dazu, dass im Stillstand des Läufers 14 an der hier dargestellten Stelle ein recht starkes Magnetfeld in Bezug auf die y-Richtung mit entsprechendem Vorzeichen je nach Orientierung der Identifikationsmagneten 34 mittels der Magnetsensoreinheit 32.1 gemessen wird. Wenn ein zweiter Läufer 14 in der entsprechenden Gruppierung lediglich oder überwiegend entgegengesetzt orientierte, also in Orientierung 0 angeordnete, Identifikationsmagneten 34 aufweist, wird an einem in der Nähe dieser Gruppierung angeordneten Magnetsensor 32 ebenfalls ein recht starkes Magnetfeld aber mit entgegengesetztem Vorzeichen gemessen. Hierüber lassen sich der erste und der zweite Läufer voneinander differenzieren. Entsprechendes gilt auch für die Gruppierung von Identifikationsmagneten 34 rechts des Positionsmagneten 30 und/oder für alle Identifikationsmagneten 34 des Läufers 14 zusammen.

Der vorstehend beschriebene Ansatz kann vorteilhaft dazu genutzt werden, einen einzigen (ersten) Läufer 14 eindeutig in einer Vielzahl von im System vorhandenen Läufern zu identifizieren. So können beispielsweise am ersten Läufer 14 die Identifikationsmagneten 34 eine Läufer-ID kodieren, die 1111 1111 lautet. Bei allen anderen Läufern können die Identifikationsmagneten 34 überwiegend entgegengesetzt orientiert sein, also Läufer-IDs kodieren, die überwiegend aus 0-Werten bestehen, beispielsweise 0000 0000, 0000 0001, 0000 0010, ... , 1000 0000. In diesem System kann der erste Läufer 14 bereits im Stillstand identifiziert werden.

Zusammengefasst ermöglicht also die Erfindung die Verwendung von üblicherweise an einem Linearmotorsystem vorhandenen 3D-Magnetsensoren zur Identifikation der einzelnen Läufer. Die Läufer weisen insbesondere eine Reihe von Identifikationsmagneten auf, deren Polaritäten eine eindeutige Identifikationsnummer des jeweiligen Läufers kodieren. Dabei können Magnetfeldkomponenten in unterschiedlichen Raumrichtungen zur Positionsermittlung einerseits und zur Identifikationsermittlung andererseits genutzt werden, sodass sich zumindest im Wesentlichen keine Störungen zwischen Positionsermittlung und Identifikationsermittlung ergeben.

Durch Verwendung der ohnehin vorhandenen Positionssensoren zur Identifizierung ergeben sich besondere Kostenvorteile. Die Identifizierung wenigstens eines Läufers ist sogar ohne Bewegung möglich. Dadurch, dass sich eindeutige IDs für die Läufer vergeben lassen, kann insbesondere eine vorausschauende Wartung implementiert werden, indem die Verwendung des Läufers, zum Beispiel sein bisher insgesamt zurückgelegter Bewegungsweg, aufgezeichnet werden kann. Schließlich ist die eindeutige Identifizierung der Läufer insbesondere auch bei zwischenzeitlicher Abschaltung des Systems zuverlässig gegeben.

### Bezugszeichenliste

- 10: Transportsystem
- 12: Linearmotor
- 14: Läufer
- 16: Führungsbahn
- 18: Führungsachse
- 20: Elektromagneten
- 22: Antriebsmagnet
- 24: Führungsrollen
- 26: Führungsschiene
- 28: Positionserfassungseinrichtung
- 30: Positionsmagnet
- 32: Magnetsensoreinheit
- 34: Identifikationsmagneten
- 36: Magnetfeld/Feldlinien
- 38: Magnetfeld/Feldlinien
- 40: Zentralpunkt
- 42: Zentralebene

## Patentansprüche

1. Linearmotorsystem (10), insbesondere Transportsystem, z.B. Multicarrier, mit mehreren Läufern (14),
mit einer Führungsbahn (16) für die Läufer (14) und mit einer Steuerungseinrichtung,
wobei an der Führungsbahn (16)
ein erster Magnetsensor (32) zur Ermittlung eines Magnetfelds in Bezug auf eine erste Raumrichtung und zur Ausgabe eines ersten Sensorsignals und ein zweiter Magnetsensor (32) zur Ermittlung eines Magnetfelds in Bezug auf eine zweite Raumrichtung und zur Ausgabe eines zweiten Sensorsignals vorgesehen sind,
wobei die Steuerungseinrichtung dazu eingerichtet ist,
auf Basis des ersten Sensorsignals eine Positionsinformation betreffend einen Läufer (14) zu ermitteln und
auf Basis des zweiten Sensorsignals eine Identifikationsinformation betreffend den Läufer (14) zu ermitteln, wobei die Identifikationsinformation auf Basis einer Raumrichtung des Magnetfelds ermittelt wird, auf deren Basis keine Positionsinformation ermittelt wird.

2. Linearmotorsystem (10) nach Anspruch 1,
wobei an wenigstens einem Läufer (14) ein erster Magnet (30), insbesondere ein Positionsmagnet, in einer ersten Orientierung und/oder derart angeordnet ist, dass das Magnetfeld des ersten Magneten (30) am Ort des ersten Magnetsensors (32) in der ersten Raumrichtung wirksam ist, und
wobei am Läufer (14) ein zweiter Magnet (34), insbesondere ein Identifikationsmagnet, in einer zweiten Orientierung und/oder derart angeordnet ist, dass das Magnetfeld des zweiten Magneten (34) am Ort des zweiten Magnetsensors (32) in der zweiten Raumrichtung wirksam ist.

3. Linearmotorsystem (10) nach Anspruch 1 oder 2,
wobei der erste und der zweite Magnet (30, 34) quer, insbesondere zumindest im Wesentlichen senkrecht, zueinander orientiert sind.

4. Linearmotorsystem (10) nach wenigstens einem der vorhergehenden Ansprüche,
wobei ein dritter Magnetsensor (32) zur Ermittlung eines Magnetfelds in Bezug auf eine dritte Raumrichtung und zur Ausgabe eines dritten Sensorsignals vorgesehen ist, wobei die Steuerungseinrichtung dazu eingerichtet ist, die Positionsinformation auch auf Basis des dritten Sensorsignals zu ermitteln.

5. Linearmotorsystem (10) nach wenigstens einem der vorhergehenden Ansprüche,
wobei der erste, der zweite und/oder der dritte Magnetsensor durch eine gemeinsame Sensoreinheit (32) gebildet sind und/oder
wobei der erste, der zweite und/oder der dritte Magnetsensor ein Hallsensor ist.

6. Linearmotorsystem (10) nach wenigstens einem der vorhergehenden Ansprüche,
wobei eine Mehrzahl von ersten, zweiten und/oder dritten Magnetsensoren (32) entlang der Führungsbahn (16) verteilt angeordnet ist.

7. Linearmotorsystem (10) nach wenigstens einem der vorhergehenden Ansprüche,
wobei die Führungsbahn (16) eine x-Richtung definiert, die einer Führungsrichtung (18) der Führungsbahn (16) entspricht, wobei sich eine y-Richtung senkrecht zur x-Richtung erstreckt und wobei sich eine z-Richtung senkrecht sowohl zur x-Richtung als auch zur y-Richtung erstreckt.

8. Linearmotorsystem (10) nach Anspruch 7,
wobei der erste Magnet (30) zumindest im Wesentlichen in z-Richtung orientiert ist und/oder wobei der zweite Magnet (34) zumindest im Wesentlichen in y-Richtung orientiert ist.

9. Linearmotorsystem (10) nach Anspruch 7 oder 8,
wobei die erste Raumrichtung die x-Richtung oder die z-Richtung ist und/oder wobei die zweite Raumrichtung die y-Richtung ist.

10. Linearmotorsystem (10) nach wenigstens einem der vorhergehenden Ansprüche,
wobei der erste, der zweite und/oder der dritte Magnetsensor (32), insbesondere die Sensoreinheit (32), zumindest im Wesentlichen in einer Ebene (42), insbesondere der xz-Ebene, angeordnet ist, die senkrecht zur Orientierung des zweiten Magneten (34) und durch einen Zentralpunkt (40) des zweiten Magneten (34) verläuft.

11. Linearmotorsystem (10) nach wenigstens einem der vorhergehenden Ansprüche,
wobei am Läufer (14) mehrere zweite Magneten (34) angeordnet sind, wobei die zweiten Magneten (34) eine Kennung des Läufers (14) bilden.

12. Linearmotorsystem (10) nach wenigstens einem der vorhergehenden Ansprüche,
wobei am Läufer (14) mehrere zweite Magneten (34) angeordnet sind, die jeweils in einer bestimmten Orientierung, insbesondere in einer von einer ersten Orientierung und einer zweiten, der ersten entgegengesetzten Orientierung, am Läufer (14) angeordnet sind und wobei die bestimmten Orientierungen bestimmten Identifikationsinformationen zugeordnet sind.

13. Linearmotorsystem (10) nach wenigstens einem der vorhergehenden Ansprüche,
wobei ein erster Läufer (14) eine Mehrzahl an zweiten Magneten (34) aufweist, wobei die zweiten Magneten (34) des ersten Läufers (14) und/oder eine Gruppierung von zweiten Magneten (34) des ersten Läufers (14) überwiegend in einer ersten Orientierung angeordnet sind, insbesondere wobei ein zweiter Läufer (14) und/oder mehrere weitere Läufer (14) eine Mehrzahl an zweiten Magneten (34) aufweist, wobei die zweiten Magneten (34) am zweiten bzw. weiteren Läufer (14) oder eine Gruppierung von zweiten Magneten (34) am zweiten bzw. weiteren Läufer (14) nicht überwiegend in der ersten Orientierung, insbesondere überwiegend in einer anderen, insbesondere der ersten entgegengesetzten, Orientierung, angeordnet sind.

14. Läufer (14) für ein Linearmotorsystem (10) nach einem der vorstehenden Ansprüche,
wobei der Läufer (14) wenigstens einen Positionsmagneten (30) und wenigstens einen Identifikationsmagneten (34) aufweist und
wobei der Identifikationsmagnet (34) quer, insbesondere zumindest im Wesentlichen senkrecht, zum Positionsmagneten (30) orientiert ist.

15. Verfahren zum Betreiben eines Linearmotorsystems (10), nach einem der vorstehenden Ansprüche,
wobei das Linearmotorsystem (10) mehrere Läufer (14) und eine Führungsbahn (16) für die Läufer (14) umfasst,
wobei das Verfahren umfasst:
Ermitteln eines Magnetfelds in Bezug auf eine erste Raumrichtung mittels eines ersten, an der Führungsbahn (16) angeordneten Magnetsensors (32);
Ermitteln eines Magnetfelds in Bezug auf eine zweite Raumrichtung mittels eines zweiten, an der Führungsbahn (16) angeordneten Magnetsensors (32);
Ermitteln einer Positionsinformation betreffend einen Läufer (14) auf Basis des Magnetfelds in Bezug auf die erste Raumrichtung;
Ermitteln einer Identifikationsinformation betreffend einen Läufer (14) auf Basis des Magnetfelds in Bezug auf die zweite Raumrichtung.

## Claims

1. A linear motor system (10), in particular a transport system, e.g. a multicarrier, having a plurality of carriers (14),
having a guide track (16) for the carriers (14) and having a control device, wherein, at the guide track (16),
a first magnetic sensor (32) for determining a magnetic field with respect to a first spatial direction and for outputting a first sensor signal and
a second magnetic sensor (32) for determining a magnetic field with respect to a second spatial direction and for outputting a second sensor signal are provided,
wherein the control device is configured
to determine position information relating to a carrier (14) on the basis of the first sensor signal and
to determine identification information relating to the carrier (14) on the basis of the second sensor signal, wherein the identification information is determined on the basis of a spatial direction of the magnetic field on whose basis no position information is determined.

2. A linear motor system (10) according to claim 1,
wherein a first magnet (30), in particular a position magnet, is arranged at at least one carrier (14) in a first orientation and/or such that the magnetic field of the first magnet (30) is effective in the first spatial direction at the location of the first magnet sensor (32), and
wherein a second magnet (34), in particular an identification magnet, is arranged at the carrier (14) in a second orientation and/or such that the magnetic field of the second magnet (34) is effective in the second spatial direction at the location of the second magnetic sensor (32).

3. A linear motor system (10) according to claim 1 or 2,
wherein the first magnet and the second magnet (30, 34) are oriented transversely, in particular at least substantially perpendicular, to one another.

4. A linear motor system (10) according to at least one of the preceding claims,
wherein a third magnetic sensor (32) is provided for determining a magnetic field with respect to a third spatial direction and for outputting a third sensor signal, wherein the control device is configured to also determine the position information on the basis of the third sensor signal.

5. A linear motor system (10) according to at least one of the preceding claims,
wherein the first, the second and/or the third magnetic sensor is/are formed by a common sensor unit (32), and/or
wherein the first, the second and/or the third magnetic sensor is/are a Hall sensor.

6. A linear motor system (10) according to at least one of the preceding claims,
wherein a plurality of first, second and/or third magnetic sensors (32) are arranged distributed along the guide track (16).

7. A linear motor system (10) according to at least one of the preceding claims,
wherein the guide track (16) defines an x direction which corresponds to a guidance direction (18) of the guide track (16), wherein a y direction extends perpendicular to the x direction, and wherein a z direction extends perpendicular to both the x direction and the y direction.

8. A linear motor system (10) according to claim 7,
wherein the first magnet (30) is oriented at least substantially in the z direction, and/or wherein the second magnet (34) is oriented at least substantially in the y direction.

9. A linear motor system (10) according to claim 7 or 8,
wherein the first spatial direction is the x direction or the z direction, and/or wherein the second spatial direction is the y direction.

10. A linear motor system (10) according to at least one of the preceding claims,
wherein the first, the second and/or the third magnetic sensor (32), in particular the sensor unit (32), is/are at least substantially arranged in a plane (42), in particular the xz plane, which extends perpendicular to the orientation of the second magnet (34) and through a central point (40) of the second magnet (34).

11. A linear motor system (10) according to at least one of the preceding claims,
wherein a plurality of second magnets (34) are arranged at the carrier (14), wherein the second magnets (34) form an identifier of the carrier (14).

12. A linear motor system (10) according to at least one of the preceding claims,
wherein a plurality of second magnets (34) are arranged at the carrier (14) and are each arranged in a specific orientation, in particular in one of a first orientation and a second orientation opposite the first orientation, at the carrier (14), and wherein the specific orientations are associated with specific identification information.

13. A linear motor system (10) according to at least one of the preceding claims,
wherein a first carrier (14) has a plurality of second magnets (34), wherein the second magnets (34) of the first carrier (14) and/or a grouping of second magnets (34) of the first carrier (14) are predominantly arranged in a first orientation,
in particular wherein a second carrier (14) and/or a plurality of further carriers (14) has/have a plurality of second magnets (34), wherein the second magnets (34) at the second or further carrier (14) or a grouping of second magnets (34) at the second or further carrier (14) are not predominantly arranged in the first orientation, but are in particular predominantly arranged in another orientation which is in particular opposite the first orientation.

14. A carrier (14) for a linear motor system (10) according to any one of the preceding claims,
wherein the carrier (14) has at least one position magnet (30) and at least one identification magnet (34), and
wherein the identification magnet (34) is oriented transversely, in particular at least substantially perpendicular, to the position magnet (30).

15. A method of operating a linear motor system (10) according to any one of the preceding claims,
wherein the linear motor system (10) comprises a plurality of carriers (14) and a guide track (16) for the carriers (14),
wherein the method comprises:
determining a magnetic field with respect to a first spatial direction by means of a first magnetic sensor (32) arranged at the guide track (16);
determining a magnetic field with respect to a second spatial direction by means of a second magnetic sensor (32) arranged at the guide track (16);
determining position information relating to a carrier (14) on the basis of the magnetic field with respect to the first spatial direction; and
determining identification information relating to a carrier (14) on the basis of the magnetic field with respect to the second spatial direction.

## Revendications

1. Système à moteurs linéaires (10), en particulier système de transport, par exemple du type multi-chariots,
comprenant plusieurs chariots (14),
comprenant une voie de guidage (16) pour les chariots (14) et comprenant un dispositif de commande,
dans lequel
sur la voie de guidage (16),
il est prévu un premier capteur magnétique (32) pour déterminer un champ magnétique par rapport à une première direction dans l'espace et pour émettre un premier signal de capteur, et il est prévu un deuxième capteur magnétique (32) pour déterminer un champ magnétique par rapport à une deuxième direction dans l'espace et pour émettre un deuxième signal de capteur,
le dispositif de commande est conçu pour
déterminer, sur la base du premier signal de capteur, une information de position concernant un chariot (14), et
déterminer, sur la base du deuxième signal de capteur, une information d'identification concernant le chariot (14), l'information d'identification étant déterminée en se basant sur une direction dans l'espace du champ magnétique sur la base de laquelle aucune information de position n'est déterminée.

2. Système à moteurs linéaires (10) selon la revendication 1,
dans lequel un premier aimant (30), en particulier un aimant de position, est disposé sur au moins un chariot (14) selon une première orientation et/ou de telle sorte que le champ magnétique du premier aimant (30) soit actif à l'endroit du premier capteur magnétique (32) dans la première direction dans l'espace, et
un deuxième aimant (34), en particulier un aimant d'identification, est disposé sur le chariot (14) selon une deuxième orientation et/ou de telle sorte que le champ magnétique du deuxième aimant (34) soit actif à l'endroit du deuxième capteur magnétique (32) dans la deuxième direction dans l'espace.

3. Système à moteurs linéaires (10) selon la revendication 1 ou 2,
dans lequel les premier et deuxième aimants (30, 34) sont orientés transversalement, en particulier au moins sensiblement perpendiculairement, l'un par rapport à l'autre.

4. Système à moteurs linéaires (10) selon l'une au moins des revendications précédentes,
dans lequel est prévu un troisième capteur magnétique (32) pour déterminer un champ magnétique par rapport à une troisième direction dans l'espace et pour émettre un troisième signal de capteur, le dispositif de commande étant conçu pour déterminer l'information de position en se basant également sur le troisième signal de capteur.

5. Système à moteurs linéaires (10) selon l'une au moins des revendications précédentes,
dans lequel les premier, deuxième et/ou troisième capteurs magnétiques sont formés par une unité de capteur commune (32), et/ou le premier, le deuxième et/ou le troisième capteur magnétique est un capteur à effet Hall.

6. Système à moteurs linéaires (10) selon l'une au moins des revendications précédentes,
dans lequel une pluralité de premiers, deuxièmes et/ou troisièmes capteurs magnétiques (32) sont disposés en étant répartis le long de la voie de guidage (16).

7. Système à moteurs linéaires (10) selon l'une au moins des revendications précédentes,
dans lequel la voie de guidage (16) définit une direction x qui correspond à une direction de guidage (18) de la voie de guidage (16), une direction y s'étendant perpendiculairement à la direction x, et une direction z s'étendant perpendiculairement à la fois à la direction x et à la direction y.

8. Système à moteurs linéaires (10) selon la revendication 7,
dans lequel le premier aimant (30) est orienté au moins sensiblement dans la direction z, et/ou le deuxième aimant (34) est orienté au moins sensiblement dans la direction y.

9. Système à moteurs linéaires (10) selon la revendication 7 ou 8,
dans lequel la première direction dans l'espace est la direction x ou la direction z, et/ou la deuxième direction dans l'espace est la direction y.

10. Système à moteurs linéaires (10) selon l'une au moins des revendications précédentes,
dans lequel le premier, le deuxième et/ou le troisième capteur magnétique (32), en particulier l'unité de capteur (32), est disposé(e) au moins sensiblement dans un plan (42), en particulier dans le plan xz, qui s'étend perpendiculairement à l'orientation du deuxième aimant (34) et passe par un point central (42) du deuxième aimant (34).

11. Système à moteurs linéaires (10) selon l'une au moins des revendications précédentes,
dans lequel plusieurs deuxièmes aimants (34) sont disposés sur le chariot (14), les deuxièmes aimants (34) formant un identifiant du chariot (14).

12. Système à moteurs linéaires (10) selon l'une au moins des revendications précédentes,
dans lequel plusieurs deuxièmes aimants (34) sont disposés sur le chariot (14), qui sont chacun disposés sur le chariot (14) selon une orientation définie, en particulier selon une orientation parmi une première orientation et une deuxième orientation opposée à la première, et les orientations définies sont associées à des informations d'identification définies.

13. Système à moteurs linéaires (10) selon l'une au moins des revendications précédentes,
dans lequel un premier chariot (14) présente une pluralité de deuxièmes aimants (34), les deuxièmes aimants (34) du premier chariot (14) et/ou un groupement de deuxièmes aimants (34) du premier chariot (14) étant disposés majoritairement selon une première orientation,
en particulier, un deuxième chariot (14) et/ou plusieurs autres chariots (14) présente(nt) une pluralité de deuxièmes aimants (34), les deuxièmes aimants (34) sur le deuxième chariot ou les autres chariots (14) ou un groupement de deuxièmes aimants (34) sur le deuxième chariot ou sur les autres chariots (14) n'étant pas disposés majoritairement selon la première orientation, en particulier étant disposés majoritairement selon une autre orientation, en particulier opposée à la première.

14. Chariot (14) pour un système à moteurs linéaires (10) selon l'une des revendications précédentes,
dans lequel le chariot (14) présente au moins un aimant de position (30) et au moins un aimant d'identification (34), et
l'aimant d'identification (34) est orienté transversalement, en particulier au moins sensiblement perpendiculairement, par rapport à l'aimant de position (30).

15. Procédé pour faire fonctionner un système à moteurs linéaires (10) selon l'une des revendications précédentes,
dans lequel le système à moteurs linéaires (10) comprend plusieurs chariots (14) et une voie de guidage (16) pour les chariots (14),
le procédé consistant à :
déterminer un champ magnétique par rapport à une première direction dans l'espace au moyen d'un premier capteur magnétique (32) disposé sur la voie de guidage (16) ;
déterminer un champ magnétique par rapport à une deuxième direction dans l'espace au moyen d'un deuxième capteur magnétique (32) disposé sur la voie de guidage (16) ;
déterminer une information de position concernant un chariot (14) en se basant sur le champ magnétique par rapport à la première direction dans l'espace ;
déterminer une information d'identification concernant un chariot (14) en se basant sur le champ magnétique par rapport à la deuxième direction dans l'espace.
